# EUROPÄISCHE PATENTSCHRIFT

(11) **EP 1 776 576 B1**
(45) Veröffentlichungstag und Bekanntmachung des Hinweises auf die Patenterteilung: **13.08.2008**
(21) Anmeldenummer: 05771859.5
(22) Anmeldetag: 24.06.2005
(51) Int. Cl.: G01N 21/35, G01N 21/85, G01N 21/27, C21C 5/30

(54) **BERÜHRUNGSLOSE ABGASMESSUNG MITTELS FTIR-SPEKTROSKOPIE AN METALLURGISCHEN AGGREGATEN**
NON-CONTACT EXHAUST GAS MEASUREMENT BY MEANS OF FTIR SPECTROSCOPY ON METALLURGICAL PLANTS
MESURE SANS CONTACT DES FUMEES PAR SPECTROSCOPIE IRTF SUR DES UNITES METALLURGIQUES

(30) Priorität: 12.08.2004 DE 102004039076
(43) Veröffentlichungstag der Anmeldung: 25.04.2007
(73) Patentinhaber: SMS Demag Aktiengesellschaft, 40237 Düsseldorf (DE)
(72) Erfinder: JANNASCH, Otmar, 47239 Duisburg (DE)
(74) Vertreter: Klüppel, Walter
(86) Internationale Anmeldenummer: PCT/EP2005/006848
(87) Internationale Veröffentlichungsnummer: WO 2006/015660

(56) Entgegenhaltungen:
- US-A- 3 720 404
- US-A- 3 871 871
- US-A- 5 984 998
- US-A1- 2003 160 174

## Beschreibung

Die Erfindung betrifft ein Verfahren und eine Vorrichtung zur berührungslosen Abgasmessung an metallurgischen Aggregaten bzw. Anlagen in heißer und schmutziger Umgebungsluft, insbesondere an einem Konverter, mit einem mit Abstand von der metallurgischen Anlage installierten FTIR-Spektrometer (FTIR = Fourier Transform InfraRed), dessen Messstrahl an einer geeigneten Öffnung des Abgaskanals als Messstelle in das Abgas gerichtet wird, dabei entsprechend der Messstrahllänge im Abgas ein Abgasvolumensegment in Form eines Zylinders dieser Länge messtechnisch erfasst und die hierbei erhaltenen Messwerte vom FTIR-Spektrometer in von der Abgaszusammensetzung abhängigen Spektren dargestellt werden, die dann unter Einbeziehung der Abgastemperatur und eines vorab in Form einer temperaturabhängigen Energiebilanz ermittelten mathematischen Modells die Berechnung der Abgaszusammensetzung ohne zeitliche Verzögerung ermöglicht.

Entsprechende Verfahren und Vorrichtungen sind beispielsweise aus US 2003 / 160 174 A1, US 5 984 998 A und US 3 871 871 A bekannt.

Bei der Durchführung von metallurgischen Prozessen in Anlagenteilen, wie beispielsweise einem Konverter, stellt die Kenntnis der zeitabhängigen Abgaszusammensetzung ein wichtiges Hilfsmittel dar, um Aufschluss über den Prozessfortschritt zu liefern und um diesen dann entsprechend steuern zu können. Bekannte mögliche Analyseverfahren bestehen beispielsweise darin, dem Abgasstrom ein begrenztes Volumen zu entnehmen und diese Abgasprobe dann beispielsweise spektrometrisch zu analysieren, wie beispielhaft in der DE 42 17 933 C2 zur Bestimmung des Endpunktes für den Frischprozess in Sauerstoffkonvertern beschrieben wird.

Nachteilig bei Analyseverfahren auf Probenahmebasis ist die zeitliche Verzögerung, mit der nach der Probenahme das Analyseergebnis erhalten wird, da vorher das heiße Abgas gekühlt und eventuell für die Analyse aufbereitet werden muss. Weiterhin nachteilig ist die bestehende Notwendigkeit, das Entnahmesystem (Lanze, Rohrleitungen) zu säubern (da das Abgas schmutzig ist), wodurch sich Unterbrechungen ergeben, die gleichfalls zu einer zeitlichen Verzögerung bis zum Vorliegen des Analyseergebnisses führt. Schließlich ist nur bei exakter strömungsgleicher Entnahme des Abgases auch ein exaktes Analyseergebnis zu erreichen, weshalb dieses und auch aufgrund des geringen Probenvolumens nicht unbedingt repräsentativ sein muss.

Um die geschilderten Nachteile zu vermeiden, wird in der Veröffentlichung von O. Jannasch, H.-W.Gudenau, K. Mavrommatis, D. Senk: "Bestimmung der Nachverbrennung im Elektrolichtbogenofen durch FTIR-Abgasanalyse"; Vortrag 18. Aachener Stahlkolloquium 25. und 26. September 2003, Tagungsband Verlag Mainz, Aachen, ein Verfahren vorgestellt, mit dem eine berührungslose Abgasanalyse ohne nennenswerte Zeitverzögerung durchgeführt werden kann.

Zur Durchführung der berührungslosen Abgasanalyse wird mit seitlichem Abstand zum Elektrolichtbogenofen ein FTIR-Spektrometer auf einer Plattform installiert, dessen Messstrahl (Laserstrahl) in einen Spalt des Abgaskrümmers gerichtet ist. Aus den Messergebnissen in Form von temperaturabhängigen Spektren und den zu Vergleichszwecken mit einem herkömmlichen Gasanalysator, basierend auf Probenahme, erhaltenen Abgasbestandteilen wird ein an die Bedingungen eines Elektrostahlwerks angepasstes mathematisches Modell in Form einer Energiebilanz entwickelt. Die nachfolgende Kombination dieses entwickelten Modells mit aktuellen Werten der FTIR-Spektrometrie ergibt dann ein schnelles und berührungsloses Abgasanalyseverfahren, das zu einer Steuerung der Nachverbrennung im Elektrolichtbogenofen verwendet werden kann und zu einer effizienten Nutzung der im Abgas enthaltenen Energie führen sollte.

Ausgehend vom geschilderten Stand der Technik ist es Aufgabe der Erfindung, das für den Elektrolichtbogenofen entwickelte berührungslose Abgasanalyseverfahren an weitere metallurgische Anlagen, die sich in heißer und schmutziger Umgebungsluft befinden, wie insbesondere Konverter, an derartige Anlagen anzupassen und eine hierfür geeignete Vorrichtung anzugeben.

Die gestellte Aufgabe wird verfahrensmäßig mit den kennzeichnenden Merkmalen des Anspruchs 1 dadurch gelöst, dass zunächst das der Berechnung der Abgaszusammensetzung zugrunde liegende mathematische Modell an die heiße und schmutzige Umgebungsluft, die vom Messstrahl gleichzeitig mit erfasst wird, und an die speziellen Temperaturen und Abgaszusammensetzungen des entsprechenden metallurgischen Aggregats, insbesondere an die eines Konverters, angepasst und entsprechend neu erarbeitet wird, wobei durch Eichungen Referenzspektren erzeugt werden, zusätzlich zur spektroskopischen Erfassung der Abgaszusammensetzung auch die Strömungseigenschaften (laminare bzw. turbulente Anteile) des Abgases mit erfasst und zur Unterstützung der Berechnungen bei der Modellbildung mit verwendet werden und dass die Messstelle für das FTIR-Spektrometer so gewählt ist, dass der vom FTIR-Spektrometer ausgehende geradlinige Messstrahl durch die vordere erste Messöffnung des Abgaskanals, dann in freiem Durchgang durch das Abgas und schließlich durch die rückseitige zweite Messöffnung des Abgaskanals auf einen rückseitigen kalten Hintergrund außerhalb des Abgaskanals geführt werden kann.

Eine Vorrichtung zur Durchführung eines derartigen berührungslosen Abgasanalyseverfahrens ist durch die Merkmale des Anspruchs 5 gekennzeichnet.

Vorteilhafte Ausgestaltungen der Erfindung sind in den Unteransprüchen angegeben.

Die Messstelle für den Messstrahl des FTIR-Spektrometers wird an einer geeigneten Stelle des Abgaskanals so ausgewählt, dass der Messstrahl von einer vorderen Öffnung des Abgaskanals in freiem Durchgang durch das Abgas und dann durch eine rückseitige zweite Öffnung des Abgaskanals auf einen rückseitigen kalten Hintergrund außerhalb des Abgaskanals auftrifft. Der kalte Hintergrund, der für die spektroskopische Abgaserfassung als Referenzpunkt erforderlich ist, sollte dabei möglichst nahe hinter dem Abgaskanal angeordnet sein. Die für eine möglichst genaue Messung notwendige exakte Ausrichtung des Messstrahls des FTIR-Spektrometers durch die Öffnungen des Abgaskanals der Messstelle kann dabei wahlweise durch ein Spiegelsystem durchgeführt werden. Die zusätzlich zur Unterstützung der Modellbildung vorgenommene Erfassung der Strömungseigenschaften des Abgases wird erfindungsgemäß mit einer CCD-Kamera vorgenommen, die an der Messstelle des FTIR-Spektrometers oder in unmittelbarer Nähe dieser Messstelle installiert ist.

Da sich sowohl das FTIR-Spektrometer als auch die CCD-Kamera in der heißen Nähe der zu messenden metallurgischen Anlage befindet, ist es unbedingt erforderlich, beide empfindlichen und auch teuren Geräte entsprechend zu schützten und insbesondere zu kühlen, beispielsweise mit flüssigem Stickstoff.

Durch die räumlichen Abstände des FTIR-Spektrometers und des kalten Hintergrundes vom Abgaskanal werden bei der Durchführung einer Spektralmessung nicht nur die Inhaltstoffe des Abgases erfasst, sondern in gleicher Weise auch die der schmutzigen Umgebungsluft, die sich zwischen dem Abgaskanal und dem FTIR-Spektrometer bzw. dem kalten Hintergrund befindet. Bei der Aufstellung des mathematischen Modells müssen diese nicht zum Abgas gehörenden Stoffe berücksichtigt und entsprechend eliminiert werden, um keine spätere Fehlinterpretation der Messergebnisse zu verursachen.

Der kalte Hintergrund ist notwendig, um das Spektrometer zu kalibrieren. Ein kalter Hintergrund emittiert keine infraroten Aktivitäten, von daher erhält das Spektrometer ständig eine Referenz, um die Spektren des heißen zu messenden Abgases aufzeichnen zu können.

Die Entfernungen zwischen Messpunkt und Spektrometer können im Idealfall zwischen 15 m und 30 m betragen; bei längeren Entfernungen ist ein Verstärker erforderlich. Bei Messstandorten, an denen kein direkter Sichtkontakt zwischen Messpunkt und Standort des Spektrometers möglich ist, muss ein Spiegelsystem eventuell in Verbindung mit einem Verstärker installiert werden. Derartige Maßnahmen führen zu einer Verschlechterung der Signalqualität. Eine Obergrenze der Entfernungen festzulegen ist schwierig, dies muss experimentell ermittelt werden und hängt stark von der Abgasqualität und von der Absorption der Signale durch verschmutzte Luft zwischen Messpunkt und Standort des Spektrometers ab.

Das mathematische Modell ist notwendig, da jedes Gasmolekül in Abhängigkeit von der Temperatur starke Differenzen in den Spektren (Wellenzahl und Form) zeigt. Die Intensität des Spektrums (Maximum der Emissivität) gibt Auskunft über den Anteil dieser Moleküle am Gesamtabgas- Das mathematische Modell stellt exakte Korrelationen her.

Es gibt zwei Arbeitsmodi für die infrarote Spektroskopie: einen aktiven und einen passiven Modus. Nur im aktiven Modus existiert ein wirklicher Messstrahl. Hier wird das zu messende Gas angeregt; somit würde in diesem Modus der kalte Hintergrund alle Energie absorbieren, es wird nichts reflektiert. Eine Betriebsweise im passiven Modus nutzt die im heißen Abgas gespeicherte Energie. Die Energie regt die Moleküle des Abgases zu translatorischen und rotatorischen Bewegungen an, diese werden vom Spektrometer aufgenommen. Ein kalter Hintergrund zeigt keine derartigen Aktivitäten, sozusagen eine "Nullaktivität", die für das Spektrometer als Referenz genutzt werden kann.

Eine Vorrichtung zur Durchführung einer derartigen berührungslosen Abgasmessung in heißer und schmutziger Umgebungsluft ist dadurch gekennzeichnet, dass auf einer Plattform nahe der metallurgischen Anlage ein schwingungsfrei gelagertes FTIR-Spektrometer so positioniert ist, dass durch eine geeignete Messstelle mit Öffnungen im Abgaskanal ein Messstrahl durch das Abgas hindurch auf einen rückseitigen kalten Hintergrund gerichtet werden kann und einer so ausgerichtet installierten CCD-Kamera, die gleichzeitig oder mit nur geringer zeitlicher Verzögerung zur spektroskopischen Erfassung der Abgaszusammensetzung die Strömungseigenschaften des Abgases aufzeichnet.

Da zur Messung das FTIR-Spektrometer in der Nähe des Abgaskanals installiert ist und damit sich in heißer und schmutziger Umgebungsluft befindet und weiterhin empfindlich gegenüber beispielsweise aus Transformatoren austretende elektromagnetische Felder ist, ist das FTIR-Spektrometer zum Schutz gegen den Schmutz der Umgebungsluft in einen Blechkasten eingehaust, der zur Abschirmung eventuell auftretender elektromagnetischer Felder mit mu-Metall ausgekleideten ist. In diesem Blechkasten kann bei Bedarf gleichzeitig auch die CCD-Kamera eingebracht sein.

Zum Schutz gegen die hohe Temperatur der Umgebungsluft ist das FTIR-Spektrometer bzw. der Detektor und/oder der Blechkasten mit einer Kühlvorrichtung verbunden, die beispielsweise mit flüssigem Stickstoff gespeist wird.

Das FTIR-Spektrometer sowie die CCD-Kamera sind mit einem Mess-Computer verbunden, über entsprechende Leitungen oder auch über Funk, der beispielsweise in der Messwarte der metallurgischen Anlage aufgestellt ist und so eine Auswertung der Messergebnisse an einem temperierten und sauberen Ort ermöglicht.

Weitere Einzelheiten, Merkmale und Vorteile der Erfindung werden nachfolgend an einem in einer schematischen Zeichnungsfigur dargestellten Ausführungsbeispiel näher erläutert.

In der Zeichnungsfigur dargestellt ist ein Konverter 1 herkömmlicher Bauart, weshalb hier auf die Erläuterung baulicher Einzelheiten verzichtet wurde. Den oberen Abschluss dieses Konverters 1 bildet ein Abgaskanal 6, durch den die heißen Abgase 7 aus dem Konverter 1 weggeführt werden. Mit räumlichen Abstand zu diesem Konverter 1 ist in einer vergrößerten Darstellung gegenüber der Konvertergröße die Messanordnung für die spektroskopische Abgasanalyse dargestellt, bestehend aus dem FTIR-Spektrometer 2, einem kalten Hintergrund 10 und einem Mess-Computer 9, der über eine Verbindungsleitung 11 mit dem FTIR-Spektrometer 2 verbunden ist. Das FTIR-Spektrometer 2, eingezeichnet als schwarzer Kasten, der den umhüllenden Blechkasten symbolisieren soll, ist auf einer (nicht dargestellten) Plattform in einer solchen Höhe installiert, dass der Messstrahl 3 des FTIR-Spektrometers 2 in waagrechter Richtung auf einen abgasführenden Teil des Konverters 1 auftrifft.

Kriterien für den Installationsort des FTIR-Spektrometers 2 sind das Vorhandensein oder die Schaffung geeigneter Messöffnungen 4, 5 im Abgaskanal 6, die möglichst wenig Falschluft an den Messöffnungen 4, 5 in das Abgas 7 eintreten lassen und weiterhin ein hinter dem Abgaskanal 6 in Höhe des Messstrahls 3 befindlicher kalter Hintergrund 10.

Im dargestellten Ausführungsbeispiel trifft der vom FTIR-Spektrometer 2 ausgehende Messstrahl 3 zunächst in die vordere Messöffnung 4 in den oberen Teil des Konverters 1 bzw. in den unteren Teil des Abgaskanals 6 ein, durchdringt dann das Abgas 7 im waagerechter Richtung und trifft schließlich nach Verlassen des Abgaskanals 6 durch die hintere Messöffnung 6 auf den mit Abstand zum Konverter 1 angeordneten kalten Hintergrund 10 auf. Bei seinem Weg vom FTIR-Spektrometer 2 zum kalten Hintergrund 10 durchläuft der Messstrahl 3 nicht nur das Abgas in einer Länge, die dem Abstand der beiden Messöffnungen 4 und 5 voneinander entspricht, sondern gleichzeitig auch die heiße und schmutzige Umgebungsluft 8 des Konverters 1. Erschwerend ist hierbei, dass diese Umgebungsluft 8 in ihrer Zusammensetzung und Temperatur undefiniert schwanken kann und deshalb vor und hinter dem Konverter 1 unterschiedlich sein kann. In das aufzustellende mathematische Modell sind deshalb diese von der Abgaszusammensetzung weitgehend unabhängigen Werte durch entsprechende Vorversuche und Eichungen bei der Aufstellung der Referenzspektren, die in das mathematische Modell verarbeitet werden, zu berücksichtigen.

### Bezugszeichenliste

- 1: Konverter
- 2: FTIR-Spektrometer
- 3: Messstrahl
- 4: vordere Messöffnung
- 5: hintere Messöffnung
- 6: Abgaskanal
- 7: Abgas
- 8: Umgebungsluft
- 9: Mess-Computer
- 10: kalter Hintergrund
- 11: Verbindungsleitung

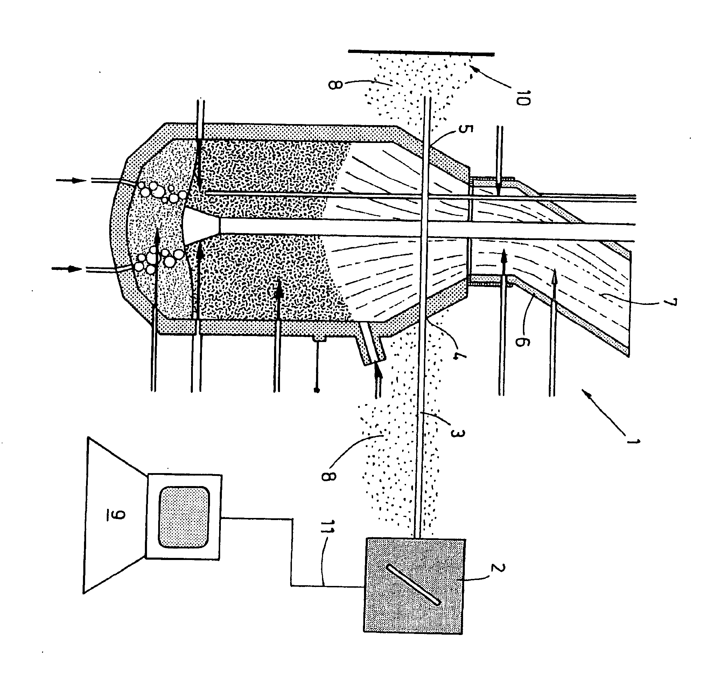

## Patentansprüche

1. Verfahren zur berührungslosen Abgasmessung an metallurgischen Anlagen in heißer und schmutziger Umgebungsluft (8), insbesondere an einem Konverter (1), mit einem mit Abstand von der metallurgischen Anlage installierten FTIR-Spektrometer (2), dessen Messstrahl (3) an einer geeigneten Öffnung (4) des Abgaskanals (6) als Messstelle in das Abgas (7) gerichtet wird, dabei entsprechend der Messstrahllänge im Abgas (7) ein Abgasvolumensegment in Form eines Zylinders dieser Messstrahllänge messtechnisch erfasst und die hierbei erhaltenen Messwerte vom FTIR-Spektrometer (2) in von der Abgaszusammensetzung abhängigen Spektren dargestellt werden, die dann unter Einbeziehung der Abgastemperatur und eines vorab in Form einer temperaturabhängigen Energiebilanz ermittelten mathematischen Modells, die Berechnung der Abgaszusammensetzung ohne zeitliche Verzögerung ermöglicht,
**dadurch gekennzeichnet, dass**
a) zunächst das der Berechnung der Abgaszusammensetzung zugrunde liegende mathematische Modell an die heiße und schmutzige Umgebungsluft (8), die vom Messstrahl (3) gleichzeitig mit erfasst wird, und an die speziellen Temperaturen und Abgaszusammensetzungen des entsprechenden metallurgischen Aggregats, insbesondere an die eines Konverters (1), angepasst und entsprechend neu erarbeitet wird, wobei durch Eichungen Referenzspektren erzeugt werden, und
b) zusätzlich zur spektroskopischen Erfassung der Abgaszusammensetzung auch die Strömungseigenschaften, z.B. laminare bzw. turbulente Anteile, des Abgases (7) mit erfasst und zur Unterstützung der Berechnungen bei der Modellbildung mit verwendet werden,
c) dass die Messstelle (4) für das FTIR-Spektrometer (2) so gewählt ist, dass der vom FTIR-Spektrometer (2) ausgehende geradlinige Messstrahl (3) durch die vordere erste Messöffnung (4) des Abgaskanals (6), dann in freiem Durchgang durch das Abgas (7) und schließlich durch die rückseitige zweite Messöffnung (5) des Abgaskanals (6) auf einen rückseitigen kalten Hintergrund (10) außerhalb des Abgaskanals (6) geführt werden kann.

2. Verfahren nach Anspruch 1,
**dadurch gekennzeichnet,**
**dass** an der Messstelle (4) des FTIR-Spektrometers (2) oder in unmittelbarer Nähe dieser Messstelle (4) zur Erfassung der Strömungseigenschaften des Abgases (7) eine installierte CCD-Kamera verwendet wird.

3. Verfahren nach Anspruch 1 oder 2,
**dadurch gekennzeichnet,**
**dass** die exakte Ausrichtung des Messstrahls (3) des FTIR-Spektrometers (2) durch die Messöffnungen (4, 5) des Abgaskanals (6) der Messstelle durch ein Spiegelsystem durchgeführt wird.

4. Verfahren nach Anspruch 1, 2, oder 3,
**dadurch gekennzeichnet,**
**dass** das FTIR-Spektrometer (2) und bei Bedarf die CCD-Kamera gekühlt werden.

5. Vorrichtung zur Durchführung einer berührungslosen Abgasmessung an metallurgischen Anlagen in heißer und schmutziger Umgebungsluft (8), insbesondere an einem Konverter (1), nach einem oder mehreren der Ansprüche 1 bis 4,
**gekennzeichnet durch**
a) ein auf einer Plattform nahe der metallurgischen Anlage schwingungsfrei gelagertes FTIR-Spektrometer (2), das auf der Plattform so positioniert ist, dass **durch** eine geeignete Messstelle mit Öffnungen (4, 5) im Abgaskanal (6) ein Messstrahl (3) **durch** das Abgas (7) hindurch auf einen rückseitigen kalten Hintergrund (10) richtbar ist, so dass im Abgas (7) ein Abgasvolumensegment in Form eines Zylinders dieser Messstrahllänge messtechnisch erfasst werden kann,
b) eine so ausgerichtete installierte CCD-Kamera, dass gleichzeitig oder mit nur geringer zeitlicher Verzögerung zur spektroskopischen Erfassung der Abgaszusammensetzung die Strömungseigenschaften des Abgases (7) aufgezeichnet werden und einen Messcomputer (9), der unter Einbeziehung der Abgastemperatur und eines vorab in Form einer temperaturabhängigen Energiebilanz ermittelten mathematischen Modells, die Berechnung der Abgaszusammensetzung ermöglicht und die Referenzspektren gemäß dem Verfahrensschritt a) von Anspruch 1 erzeugt und die Strömungseigenschaften zur Unterstützung der Berechnungen bei der Modellbildung mit verwendet.

6. Vorrichtung nach Anspruch 5,
**dadurch gekennzeichnet,**
**dass** das FTIR-Spektrometer (2) zum Schutz gegen Schmutz und auftretende elektromagnetische Felder in einen mit mu-Metall ausgekleideten Blechkasten eingehaust ist.

7. Vorrichtung nach Anspruch 5 oder 6,
**dadurch gekennzeichnet,**
**dass** das FTIR-Spektrometer (2) d.h. der Detektor, und/oder der Blechkasten so wie bei Bedarf auch die CCD-Kamera mit einer Kühlvorrichtung verbunden ist, die beispielsweise mit flüssigem Stickstoff gespeist wird.

8. Vorrichtung nach Anspruch 5, 6 oder 7,
**dadurch gekennzeichnet,**
**dass** das FTIR-Spektrometer (2) und die CCD-Kamera mit einem Mess-Computer (9) verbunden sind.

## Claims

1. Contactless exhaust gas measurement at metallurgical plants in hot and contaminated ambient air (8), particularly at a converter (1), with an FTIR spectrometer (2), which is installed at a spacing from the metallurgical plant and the measuring beam (3) of which is directed at a suitable opening (4) of the exhaust gas channel (6) as measuring point in the exhaust gas (7), in that case detects by measurement in correspondence with the measuring beam length in the exhaust gas (7) an exhaust gas volume segment in the form of a cylinder of this measuring beam length and the measurement values obtained in that connection are represented by the FTIR spectrometer (2) in spectra which are dependent on the exhaust gas composition and which then enable calculation of the exhaust gas composition, without delay in time, with inclusion of the exhaust gas temperature and a mathematical model ascertained beforehand in the form of a temperature-dependent energy balance, **characterised in that**
a) initially the mathematical model upon which the calculation of the exhaust gas composition is based is adapted to the hot and contaminated ambient air (8), which is simultaneously detected by the measuring beam (3), and to the specific temperatures and exhaust gas compositions of the corresponding metallurgical unit, particularly to those of a converter (1), and correspondingly revised, wherein reference spectra are generated by calibration,
b) in addition to the spectroscopic detection of the exhaust gas composition the flow characteristics, for example laminar or turbulent components, of the exhaust gas (7) are detected therewith and conjunctively used for assisting the calculations in the model formation, and
c) the measuring point (4) for the FTIR spectrometer (2) is so selected that the rectilinear measuring beam (3) emanating from the FTIR spectrometer (2) can be guided through the front, first measuring opening (4) of the exhaust gas channel (6), then in free passage through the exhaust gas (7) and finally through the rear, second measuring opening (5) of the exhaust gas channel (6) onto a rearward cold background (10) outside the exhaust gas channel (6).

2. Method according to claim 1, **characterised in that** an installed CCD camera at the measuring point (4) of the FTIR spectrometer (2) or in the immediate vicinity of this measuring point (4) is used for detection of the flow characteristics of the exhaust gas (7).

3. Method according to claim 1 or 2, **characterised in that** the exact orientation of the measuring beam (3) of the FTIR spectrometer (2) through the measuring openings (4, 5) of the exhaust gas channel (6) of the measuring point is carried out by a mirror system.

4. Method according to claim 1, 2 or 3, **characterised in that** the FTIR spectrometer (2) and, if needed, the CCD camera are cooled.

5. Device for carrying out a contactless exhaust gas measurement at metallurgical plants in hot and contaminated ambient air (8), particularly at a converter (1), according to one or more of claims 1 to 4, **characterised by**
a) an FTIR spectrometer (2) which is mounted in vibration-free manner on a platform near the metallurgical plant and which is so positioned on the platform that a measuring beam (3) can be directed via a suitable measuring point with openings (4, 5) in the exhaust gas channel (6) through the exhaust gas (7) onto a rearward cold background (10) so that an exhaust gas volume segment in the form of a cylinder of this measuring beam length can be detected in the exhaust gas (7) by measuring and
b) a CCD camera which is installed to be so oriented that the flow characteristics of the exhaust gas (7) are recorded simultaneously or with only a small delay in time for the spectroscopic detection of the exhaust gas composition, and a measurement computer (9) which with inclusion of the exhaust gas temperature and a mathematical model ascertained beforehand in the form of a temperature-dependent energy balance enables calculation of the exhaust gas composition and generates the reference spectra according to the method step a) of claim 1 and conjunctively uses the flow characteristics for assisting the calculations in the model formation.

6. Device according to claim 5, **characterised in that** for protection against dirt and electromagnetic fields which arise the FTIR spectrometer (2) is housed in a sheet metal box clad with mu metal.

7. Device according to claim 5 or 6, **characterised in that** the FTIR spectrometer (2), i.e. the detector, and/or the sheet metal box as well as, if needed, also the CCD camera are connected with a cooling device which is supplied with, for example, liquid nitrogen.

8. Device according to claim 5, 6 or 7, **characterised in that** the FTIR spectrometer (2) and the CCD camera are connected with a measurement computer (9).

## Revendications

1. Procédé de mesure sans contact des fumées sur des installations métallurgiques en conditions d'air environnant chaud et pollué (8), notamment sur un convertisseur (1), avec un spectromètre IRTF (2) installé à distance de l'installation métallurgique, dont le faisceau de mesure (3) est dirigé vers les fumées (7) sur une ouverture adaptée (4) du conduit de fumées (6) en tant que point de mesure, en détectant à cet effet en fonction de la longueur du faisceau de mesure dans les fumées (7) un segment volumétrique de fumées sous la forme d'un cylindre de ladite longueur du faisceau de mesure et les valeurs mesurées à cet effet étant représentées par le spectromètre IRTF (2) dans des spectres dépendant de la composition des fumées, qui permet ensuite en impliquant la température des fumées de calculer la composition des fumées sans temporisation,
**caractérisé en ce que**
a) le modèle mathématique sur lequel est basé le calcul de la composition des fumées est d'abord adapté à l'air environnant (8) chaud et pollué, qui est simultanément co-détecté par le faisceau de mesure (3), ainsi qu'aux températures et compositions des fumées spéciales de l'ensemble métallurgique correspondant, notamment à celles d'un convertisseur (1) et ré-élaboré en conséquence, des spectres de référence étant créés par des étalonnages, et
b) en supplément de la détection spectroscopique de la composition des fumées, les caractéristiques d'écoulement, par exemple des parts laminaires, respectivement turbulentes des fumées 7 sont co-détectées et co-utilisées pour assister les calculs lors de la création de modèles,
c) **en ce que** le point de mesure (4) pour le spectromètre IRTF (2) est choisi de sorte que le faisceau de mesure (3) rectiligne (3) partant du spectromètre IRTF (2) puisse être dirigé à travers la première ouverture de mesure avant (4) du conduit de fumées (6), puis en passage libre à travers les fumées (7) et pour finir, à travers la deuxième ouverture de mesure arrière (5) du conduit de fumées (6) sur un fond arrière froid (10), en dessous du conduit de fumées (6).

2. Procédé selon la revendication 1,
**caractérisé en ce que**,
sur le point de mesure (4) du spectromètre IRTF (2) ou à proximité directe dudit point de mesure (4), on utilise une caméra CCD installée, pour la détection des caractéristiques d'écoulement des fumées (7).

3. Procédé selon la revendication 1 ou 2,
**caractérisé en ce que**,
on fait passer l'orientation exacte du faisceau de mesure (3) du spectromètre IRTF (2) à travers les ouvertures de mesure (4, 5) du conduit de fumées (6) du point de mesure par un système de miroirs.

4. Procédé selon la revendication 1, 2 ou 3,
**caractérisé en ce que**,
le spectromètre IRTF (2) et en cas de besoin la caméra CCD sont refroidis.

5. Dispositif pour la réalisation d'une mesure sans contact des fumées sur des installations métallurgiques en conditions d'air environnant chaud et pollué (8), notamment sur un convertisseur (1), selon l'une quelconque ou plusieurs des revendications 1 à 4,
**caractérisé par**
a) un spectromètre IRTF (2) logé sans vibrations sur une plate-forme, à proximité de l'installation métallurgique, qui est positionné sur la plate-forme de sorte qu'un faisceau de mesure 3 puisse être dirigé par un point de mesure adapté avec des ouvertures 4, 5 dans le conduit de fumée 6 à travers les fumées (6), sur un fond arrière froid 10, pour permettre de détecter par technique de mesure dans les fumées 7 un segment volumétrique de fumées sous la forme d'un cylindre de ladite longueur de faisceau de mesure,
b) une caméra CCD installée, orientée de sorte que simultanément ou avec seulement une faible temporisation par rapport à la détection spectroscopique de la composition des fumées, les caractéristiques d'écoulement des fumées 7 soient enregistrées et un ordinateur de mesure 9, qui par implication de la température des fumées et d'un modèle mathématique déterminé préalablement sous la forme d'un bilan énergétique dépendant de la température permet de calculer la composition des fumées et créé les spectres de référence selon l'étape de procédé a) de la revendication 1, et co-utilise les caractéristiques d'écoulement pour assister les calculs lors de la création du modèle.

6. Dispositif selon la revendication 5,
**caractérisé en ce que**,
le spectromètre IRTF (2) est encastré dans un caisson en tôle habillé de métal MU, pour le protéger contre la pollution et contre des champs électromagnétiques naissants.

7. Dispositif selon la revendication 5 ou 6,
**caractérisé en ce que**,
le spectromètre IRTF (2) c'est à dire le détecteur/ou le caisson en tôle, ainsi qu'en cas de besoin la caméra CCD sont reliés avec un dispositif de refroidissement, qui est alimenté par exemple en azote liquide.

8. Dispositif selon la revendication 5, 6 ou 7,
**caractérisé en ce que**,
le spectromètre IRTF (2) et la caméra CCD sont reliés à un ordinateur de mesure 9.
